# EUROPEAN PATENT APPLICATION

(11) **EP 2 475 224 A2**
(43) Date of publication of application: **11.07.2012**
(21) Application number: 11007136.2
(22) Date of filing: 02.09.2011
(51) Int. Cl.: H05B 33/08

(54) **Light device and power control circuit thereof**

(30) Priority: 11.01.2011 CN 201120006537 U
(71) Applicant: Sunonwealth Electric Machine Industry Co., Ltd., Kaohsiung, Taiwan R.O.C. (TW)
(72) Inventor: Cheng, Chung-Ken, Koahsiung (TW); Kuo, Chi-Hung, Koahsiung (TW); Ke, Li-Yong, Koahsiung (TW)
(74) Representative: LOUIS, PÖHLAU, LOHRENTZ

(57) **Abstract**

A light device comprising a light emitting unit (2), a voltage control unit (3), and a current control unit (4) is provided. The light emitting unit (2) is capable of receiving DC power. The voltage control unit (3) has a power input terminal (31), a power output terminal (32), and a voltage setting member (35), with the power input terminal (31) connecting with the light emitting unit (2), the voltage setting member (35) having a threshold value to control the voltage of the power output terminal in a value equal to or lower than the threshold value. The current control unit (4) has a voltage regulating member (41) and a current adjusting member (42), with the voltage regulating member (41) connecting with the power output terminal (32) of the voltage control unit (3) and generating a stable DC voltage, and with the current adjusting member (42) connected between the voltage regulating member (41) and a ground point to stabilize a current passing through the current adjusting member (42).

## Description

### BACKGROUND OF THE INVENTION

### 1. Field of the Invention

The present invention relates to a light device and a power control circuit thereof and, more particularly, to a light device and its power control circuit able to be driven by electrical power with any voltage level.

### 2. Description of the Related Art

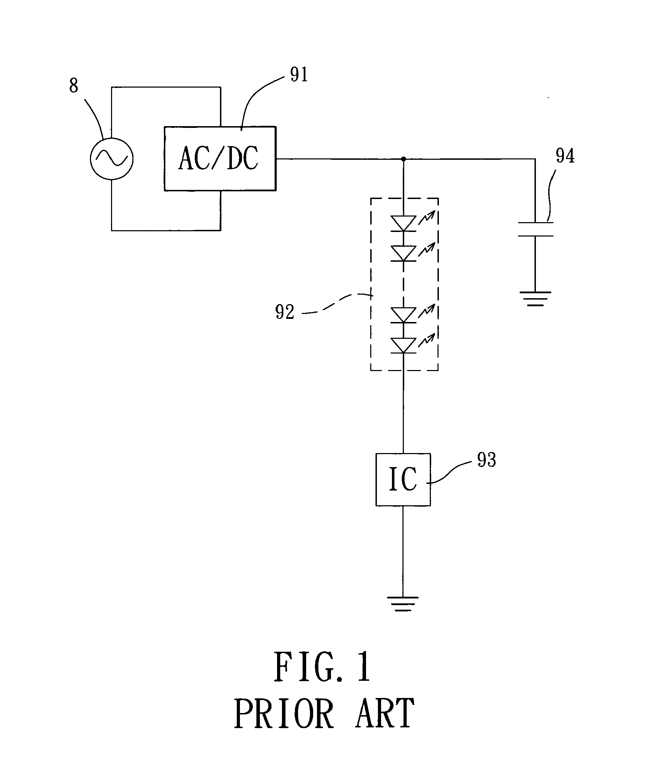

Referring to Fig. 1, a circuit diagram of a conventional light device is shown. The conventional light device includes a power receiving unit 91, a light emitting unit 92, a current control unit 93, and a filter unit 94, with the power receiving unit 91, light emitting unit 92, and current control unit 93 are sequentially connected from a power source 8 to a ground point in series. Particularly, the power receiving unit 91 is an AC/DC converter for converting AC power provided by the power source 8 into DC power and for transmitting the DC power to the light emitting unit 92. The light emitting unit 92 is constructed by plural light emitting diodes connected in series. The current control unit 93 is a current regulator IC and is adapted to control a current passing through the light emitting unit 92 so that each light emitting diode can be normally operated. The filter unit 94 has a first terminal and a second terminal, with the first terminal connecting with a connecting point between the power receiving unit 91 and light emitting unit 92 and the second terminal connecting to the ground point.

When AC power provided by the power source 8 is sent to and operates the conventional light device, the light emitting unit 92 can receive the DC power generated by the power receiving unit 91, and the current control unit 93 stabilizes the DC current passing through the light emitting unit 92. Besides, the filter unit 94 can filter out surges in the DC power, so as to avoid damages to the light emitting diodes caused by surges with high voltage level entering the light emitting unit 92. Accordingly, an operating DC power with a stable voltage level can be continuously supplied to the light emitting unit 92.

However, this conventional light device still has the following drawback. A power source that provides electrical power exceeding the withstand voltage of the current control unit 93 cannot be applied to the conventional light device since the current passing through the light emitting unit 92 is maintained by the current control unit 93. Furthermore, manufacture cost of the conventional light device will be increased if the current control unit 93 is constructed by a current regulator IC with high withstand voltage to suit the high power source. In light of this, it is desired to improve the conventional light device.

### SUMMARY OF THE INVENTION

It is therefore the primary objective of this invention to provide a light device and a power control circuit thereof, which are able to be driven by electrical power with any voltage level as well as stabilize a current passing through a light emitting unit stable, so as to achieve a large acceptable voltage range of the light device and also maintain the performance of the light device.

Another objective of this invention is to provide a light device and a power control circuit thereof, which control a voltage established on a current control unit by a voltage control unit, so that the current control unit can be constructed by electronic elements with low withstand voltage to lower manufacture cost of the light device.

The invention discloses a light device comprising a light emitting unit, a voltage control unit, and a current control unit. The light emitting unit is capable of receiving DC power. The voltage control unit has a power input terminal, a power output terminal, and a voltage setting member, with the power input terminal connecting with the light emitting unit, the voltage setting member having a threshold value to control the voltage of the power output terminal in a value equal to or lower than the threshold value. The current control unit has a voltage regulating member and a current adjusting member, with the voltage regulating member connecting with the power output terminal of the voltage control unit and generating a stable DC voltage, and with the current adjusting member connected between the voltage regulating member and a ground point to stabilize a current passing through the current adjusting member.

The invention further discloses a power control circuit of light device, which comprises a voltage control unit and a current control unit. The voltage control unit has a power input terminal, a power output terminal, and a voltage setting member, with the power input terminal capable of receiving DC power, and with the voltage setting member having a threshold value to control the voltage of the power output terminal equal to or lower than the threshold value. The current control unit has a voltage regulating member and a current adjusting member, with the voltage regulating member connecting with the power output terminal of the voltage control unit and generating a stable DC voltage, and with the current adjusting member connected between the voltage regulating member and a ground point to stabilize a current passing through the current adjusting member.

The invention further discloses that the voltage control unit further has an enabling switch and a driving member, the enabling switch has an input end connecting with the power input terminal, an output end connecting with the power output terminal, and a control end connecting with the voltage setting member, and the driving member is coupled between the input end and the control end or between a positive electrode of the light emitting unit and the control end.

The invention further discloses that the enabling switch is an NMOS transistor, while the input, output and control ends are drain, source and gate of the NMOS transistor.

The invention further discloses that the driving member is a resistor.

The invention further discloses that the voltage setting member connects between the control end and the ground point.

The invention further discloses that the voltage setting member is a Zener diode.

The invention further discloses that the voltage regulating member is a BJT, with a base of the BJT connecting with the power output terminal and the current adjusting member.

The invention further discloses that the voltage regulating member is a current regulator IC.

The invention further discloses that the current adjusting member is a resistor.

### BRIEF DESCRIPTION OF THE DRAWINGS

The present invention will become more fully understood from the detailed description given hereinafter and the accompanying drawings which are given by way of illustration only, and thus are not limitative of the present invention, and wherein:
Fig. 1 shows a circuit diagram of a conventional light device.
Fig. 2 shows a sketch view of a light device and a power control circuit thereof according to a first embodiment of the invention.
Fig. 3 shows a circuit diagram of the light device and power control circuit thereof according to the first embodiment of the invention.
Fig. 4 shows another circuit diagram of the light device and power control circuit thereof according to the first embodiment of the invention.
Fig. 5 shows a sketch view of a light device and a power control circuit thereof according to a second embodiment of the invention.

In the various figures of the drawings, the same numerals designate the same or similar parts.

### DETAILED DESCRIPTION OF THE INVENTION

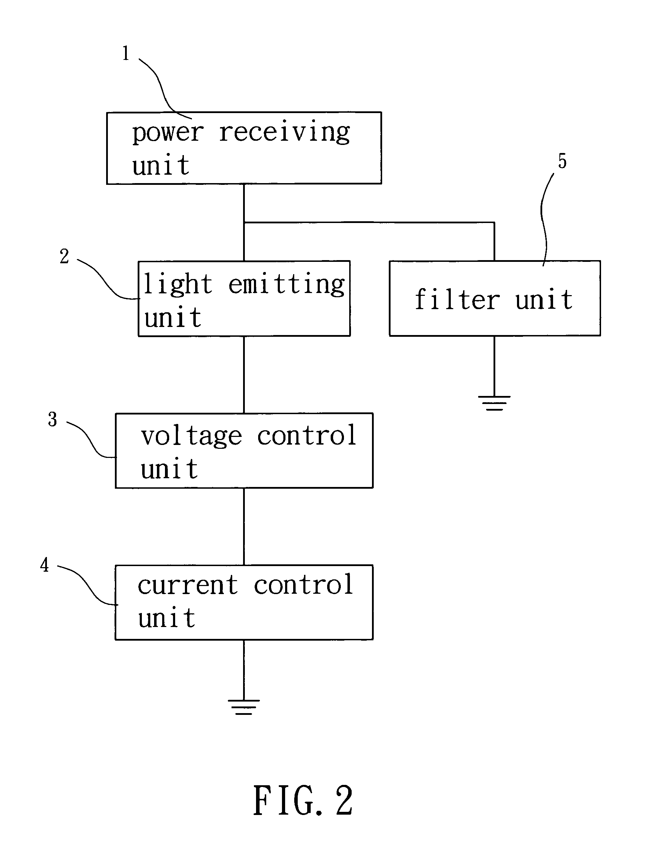

Referring to Fig. 2, a sketch view of a first embodiment of a light device of the present invention is shown, wherein the light device includes a power receiving unit 1, a light emitting unit 2, a voltage control unit 3, a current control unit 4 and a filter unit 5. The power receiving unit 1, light emitting unit 2, voltage control unit 3 and current control unit 4 are sequentially connected in series, and the filter unit 5 connects with a series circuit constructed by the light emitting unit 2, voltage control unit 3, and current control unit 4 in parallel. Besides, a circuit constructed by the voltage control unit 3 and current control unit 4 is defined as a power control circuit of the present light device. In other words, the power receiving unit 1 and light emitting unit 2 are connected with the said power control circuit in series.

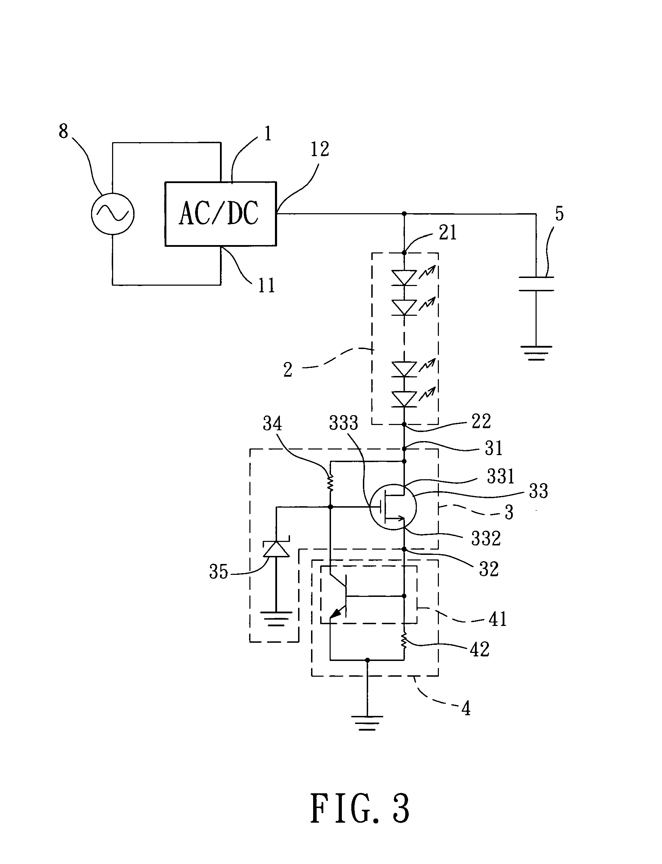

Please refer to Fig. 3, which shows a circuit diagram of the first embodiment of the present light device. The power receiving unit 1 includes an AC port 11 and a DC port 12, wherein the AC port 11 is adapted to connect with a power source 8 that provides AC electrical power, and the DC port 12 connects with the light emitting unit 2 and filter unit 5. The power receiving unit 1 is preferably an AC/DC converter such as a full bridge AD/DC converter so as to convert AC power sent to the AC port 11 into DC power and output this DC power by the DC port 12. The light emitting unit 2 has a positive electrode 21 and a negative electrode 22 connecting with the DC port 12 and voltage control unit 3 respectively, with the light emitting unit 2 further including at least one light emitting diode connected between the positive and negative electrodes 21, 22. Particularly, when the power source 8 is a DC power source, the power receiving unit 1 can be omitted, with the positive electrode 21 of the light emitting unit 2 directly connecting with the power source 8 to receive the DC power therefrom.

Referring Fig. 3 again, the voltage control unit 3 of the power control circuit includes a power input terminal 31, a power output terminal 32, an enabling switch 33, a driving member 34, and a voltage setting member 35. The power input terminal 31 connects with the negative electrode 22 of the light emitting unit 2, while the power output terminal 32 connects with the current control unit 4. The enabling switch 33 has an input end 331, an output end 332, and a control end 333, with the input end 331 connecting with the power input terminal 31, the output end 332 connecting with the power output terminal 32, and the control end 333 connecting with the voltage setting member 35. Preferably, the enabling switch 33 is an N-type MOSFET while the input, output and control ends 331, 332, 333 are the drain, source and gate of this NMOS transistor respectively. The driving member 34 is coupled between the input end 331 and control end 333 for the enabling switch 33 to normally operate when DC power is supplied to the voltage control unit 3. Besides, the driving member 34 may be a resistor if the enabling switch 33 is an NMOS transistor, so as to operate the NMOS transistor in the active region thereof. The voltage setting member 35 has a threshold value and connects between the control end 333 and a ground point. Specifically, a current can only pass the voltage setting member 35 when voltage difference between the control end 333 and ground point is larger than or equal to the threshold value, with the voltage drop of the voltage setting member 35 being equal to the threshold value. Particularly, the voltage setting member 35 is preferable a Zener diode.

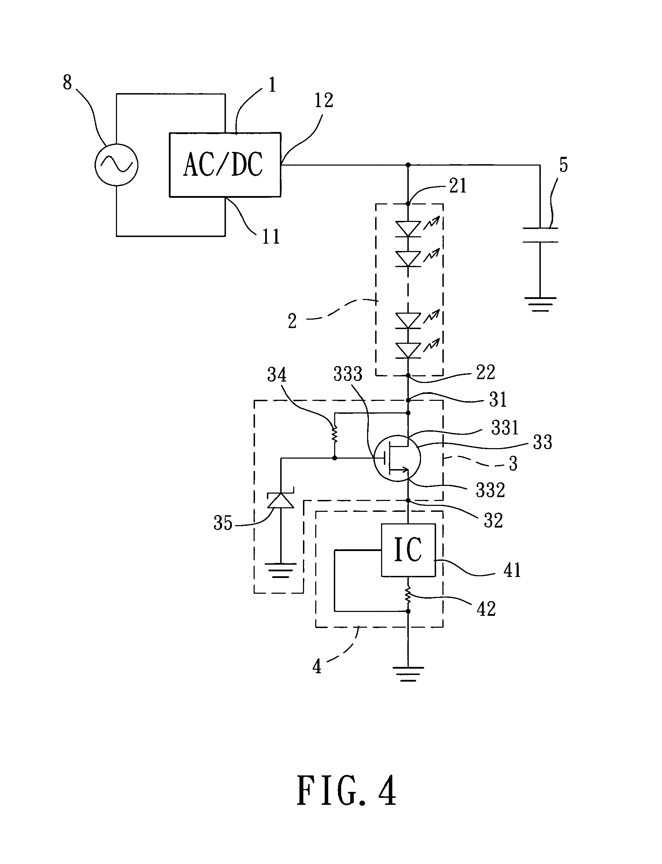

The current control unit 4 of the power control circuit can be a circuit without a current regulator IC as shown in Fig. 3 or a circuit with a current regulator IC as shown in Fig. 4. Referring to Figs. 3 and 4, the current control unit 4 includes a voltage regulating member 41, which can be implemented by a voltage regulating IC or not, and a current adjusting member 42. The voltage regulating member 41 connects with the power output terminal 32 of the voltage control unit 3 and generates a stable DC voltage based on the DC power from the voltage control unit 3. The current adjusting member 42 has a resistance value and is connected between the voltage regulating member 41 and the ground point, so as to receive the stable DC voltage of the voltage regulating member 41 and stabilize a current passing through the current adjusting member 42 based on the resistance value, wherein the resistance value can be changed to adjust the current passing through the current adjusting member 42. The current adjusting member 42 is preferably formed by a resistor and, more particularly, by a variable resistor for convenient adjustment of the passing current. In detail, when the current control unit 4 is implemented without a current regulator IC, the voltage regulating member 41 is a transistor such as an NPN-BJT, with a base of the BJT connecting with the power output terminal 32 and current adjusting member 42, and with the current adjusting member 42 connected between the base and an emitter of the BJT. By the above current control unit 4 without a current regulator IC, a low manufacture cost of the present light device is possible. On the other hand, when the current control unit 4 uses a current regulator IC to implement the voltage regulating member 41, the DC voltage outputted by the voltage regulating member 41 is extremely stable.

Please refer to Fig. 3 again. The filter unit 5, which can be constructed by a power capacitor, connects between the positive electrode 21 of the light emitting unit 2 and the ground point, so as to filter out surges contained in the DC power provided by the power receiving unit 1.

In the operation of the first embodiment of the present light device, the light emitting unit 2 receives DC power generated by the power receiving unit 1 and filtered by the filter unit 5. Moreover, not only the voltage setting member 35 can maintain a voltage established on the current control unit 4 lower than the threshold value, but also a current passing through the light emitting unit 2 is stable since the current passing through the current adjusting member 42 of the current control unit 4 is stable and the light emitting unit 2, voltage control unit 3, and current control unit 4 are connected in series. Thereby, the power control circuit constructed by the voltage control unit 3 and current control unit 4 may provide the light emitting unit 2 with a stable current as well as keep the voltage established on the current control unit 4 equal to or lower than the threshold value of the voltage setting unit 35. Accordingly, the first embodiment of the light device of the present invention can be driven by DC or AC power with any voltage level even if the voltage regulating member 41 of the current control unit 4 is constructed by electronic elements with low withstand voltage, so that a workable voltage range for the present light device is large as well as manufacture cost thereof is low.

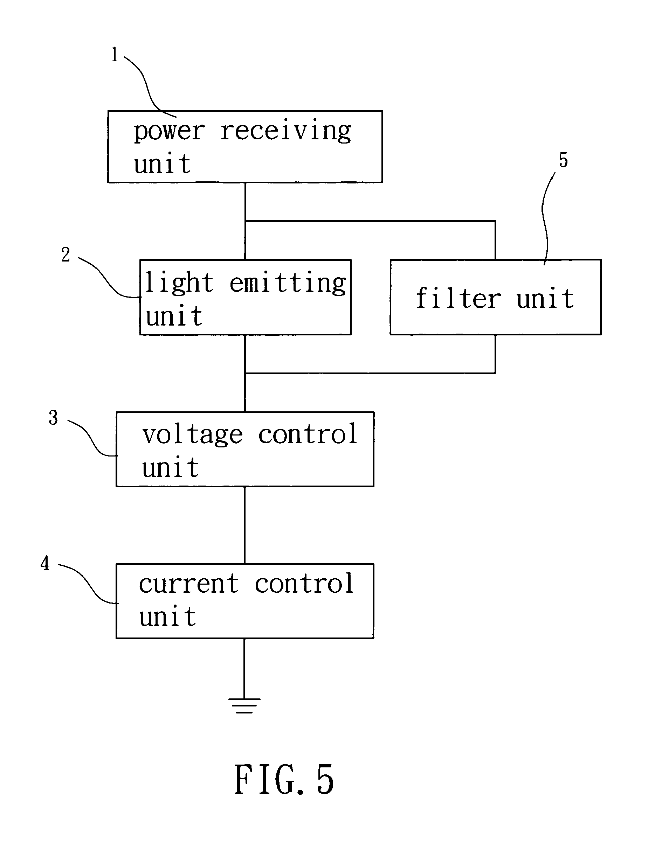

Referring to Fig. 5, a sketch view of a second embodiment of the light device of the present invention is shown. In comparison with the first embodiment, instead of connecting with the series circuit constructed by the light emitting unit 2, voltage control unit 3, and current control unit 4 in parallel, the filter unit 5 merely connects with the light emitting unit 2 in parallel. Therefore, the filter unit 5 may not only prevent the light emitting unit 2 from surges in the DC power provided by the power receiving unit 1, but increase the power factor of the present light device as high as 75-90%.

In summary, with the power control circuit constructed by the voltage control unit 3 and the current control unit 4 and connected with the light emitting unit 2 in series, the current passing through the present light device is controlled as well as the workable voltage range is large, thereby providing a light device with low cost and large workable voltage range.

Although the invention has been described in detail with reference to its presently preferable embodiment, it will be understood by one of ordinary skill in the art that various modifications can be made without departing from the spirit and the scope of the invention, as set forth in the appended claims.

## Claims

1. A light device, comprising:
a light emitting unit (2) capable of receiving DC power,
wherein the light device is **characterized in that** further comprises:
a voltage control unit (3) having a power input terminal (31), a power output terminal (32), and a voltage setting member (35), with the power input terminal (31) connecting with the light emitting unit (2), and with the voltage setting member (35) having a threshold value to control the voltage of the power output terminal (32) in a value equal to or lower than the threshold value; and
a current control unit (4) having a voltage regulating member (41) and a current adjusting member (42), with the voltage regulating member (41) connecting with the power output terminal (32) of the voltage control unit (3) and generating a stable DC voltage, and with the current adjusting member (42) connected between the voltage regulating member (41) and a ground point to stabilize a current passing through the current adjusting member (42).

2. The light device as claimed in claim 1, **characterized in that** the voltage control unit (3) further has an enabling switch (33) and a driving member (34), the enabling switch (33) has an input end (331) connecting with the power input terminal (31), an output end (332) connecting with the power output terminal (32), and a control end (333) connecting with the voltage setting member (35), and the driving member (34) is coupled between the input end (331) and the control end (333) or between a positive electrode (21) of the light emitting unit (2) and the control end (333).

3. The light device as claimed in claim 2, **characterized in that** the enabling switch (33) is an NMOS transistor, while the input, output and control ends (331, 332, 333) are drain, source and gate of the NMOS transistor.

4. The light device as claimed in claim 2, **characterized in that** the voltage setting member (35) connects between the control end (333) and the ground point.

5. The light device as claimed in claim 1, **characterized in that** the voltage regulating member (41) is a BJT, with a base of the BJT connecting with the power output terminal (32) and the current adjusting member (42).

6. The light device as claimed in claim 1, **characterized in that** the voltage regulating member (41) is a current regulator IC.

7. The light device as claimed in claim 1, **characterized in that** the current adjusting member (42) is a resistor.

8. The light device as claimed in claim 1 **characterized in that** the light device further comprises a filter unit (5) connecting with the light emitting unit (2) in parallel.

9. A power control circuit of light device, **characterized in that** comprises:
a voltage control unit (3) having a power input terminal (31), a power output terminal (32), and a voltage setting member (35), with the power input terminal (31) capable of receiving DC power, and with the voltage setting member (35) having a threshold value to control the voltage of the power output terminal (32) in a value equal to or lower than the threshold value; and
a current control unit (4) having a voltage regulating member (41) and a current adjusting member (42), with the voltage regulating member (41) connecting with the power output terminal (32) of the voltage control unit (3) and generating a stable DC voltage, and with the current adjusting member (42) connected between the voltage regulating member (41) and a ground point to stabilize a current passing through the current adjusting member (42).

10. The power control circuit of light device as claimed in claim 9, **characterized in that** the voltage control unit (3) further has an enabling switch (33) and a driving member (34), the enabling switch (33) has an input end (331) connecting with the power input terminal (31), an output end (332) connecting with the power output terminal (32), and a control end (333) connecting with the voltage setting member (35), and the driving member (34) is coupled between the input end (331) and the control end (333) or between a DC power source and the control end (333).

11. The power control circuit of light device as claimed in claim 10, **characterized in that** the enabling switch (33) is an NMOS transistor, while the input, output and control ends (331, 332, 333) are drain, source and gate of the NMOS transistor.

12. The power control circuit of light device as claimed in claim 10, **characterized in that** the voltage setting member (35) connects between the control end (333) and the ground point.

13. The power control circuit of light device as claimed in claim 9, **characterized in that** the voltage regulating member (41) is a BJT, with a base of the BJT connecting with the power output terminal (32) and the current adjusting member (42).

14. The power control circuit of light device as claimed in claim 9, **characterized in that** the voltage regulating member (41) is a current regulator IC.

15. The power control circuit of light device as claimed in claim 9, **characterized in that** the current adjusting member (42) is a resistor.
